Europäisches Patentamt

European Patent Office

Office européen des brevets

(11) Publication number: **0 149 758
B1**

# EUROPEAN PATENT SPECIFICATION

(45) Date of publication of patent specification: **01.06.88**

(51) Int. Cl.⁴: **C 04 B 35/38, C 01 G 49/02**

(21) Application number: **84114283.9**

(22) Date of filing: **27.11.84**

(54) **Process of preparing ferrite with a predetermined ferrous content.**

(30) Priority: **29.12.83 US 566872**

(43) Date of publication of application:
**31.07.85 Bulletin 85/31**

(45) Publication of the grant of the patent:
**01.06.88 Bulletin 88/22**

(84) Designated Contracting States:
**DE FR GB IT**

(56) References cited:
**DE-A-1 471 431
US-A-2 956 024
US-A-3 004 918
US-A-3 375 196**

(73) Proprietor: **International Business Machines Corporation
Old Orchard Road
Armonk, N.Y. 10504 (US)**

(72) Inventor: **Scheidecker, Ralph William
Route 1, Box 135 Byron
Minnesota 55920 (US)**
Inventor: **Suchomel, Robert Richard
Route 1, Box 135A
Minnesota 55920 (US)**

(74) Representative: **Cimberle, Andrea
IBM Italia S.p.A. Direzione Brevetti MI-SEG-555
P.O. Box 137
I-20090 Segrate (Milano) (IT)**

Courier Press, Leamington Spa, England.

EP 0 149 758 B1

## Description

This invention relates to development of proper ferrous iron concentration in Manganese Zinc, MnZn, ferrite prior to the densification step by methods such as hot pressing or sintering, and more particularly, provides steps of calcining and milling which are balanced to provide proper final ferrous iron content in a ferrite composition.

Prior art patents related to the production of MnZn ferrite have not approached the development of proper ferrous iron content during the calcining and milling steps. The prior art has failed to recognize that ferrous iron content can be controlled during the calcining operation and during the length of the milling operation.

While the prior art teaches calcining, the prior art does not appear to recognize that the calcining ought to be done in an inert atmosphere such as nitrogen, as recognized in this disclosure.

The present invention is for a process of calcining and ball milling MnZn ferrite material having compositions in the ranges of about 52—55 mole percent $Fe_2O_3$, about 26—32 mole percent MnO, and about 15—20 mole percent ZnO for achieving a ferrite having a ferrous iron content of about 1,5 percent, thereby providing optimum magnetic properties. This ferrous iron content is achieved by controlling the atmosphere, the time and the temperature of the calcining process, as well as controlling the ball milling step which further contributes to the ferrous iron content by interaction of the stainless steel balls and the ferrite slurry being milled. These two steps are balanced, so that both calcining and ball milling contribute to the final ferrous iron content where the ball milling is the primary contributor to the final particle size.

One significant aspect and feature of the invention as claimed is that the process used in the present invention is a key step in the production of ferrite, and particularly MnZn ferrite for magnetic transducer heads. An optimum MnZn ferrite product can be achieved by proper control of the chemistry of the material prior to the final densification step.

Another significant aspect and feature of the present invention is an optimum ferrite product for subsequent processing and an optimum ferrite product having qualities which are subsequently maintained through processing steps.

Figure 1 illustrates apparatus for precalcine and post calcine wet ball milling and,

Figure 2 illustrates apparatus for calcining.

Production of MnZn ferrite is done under consideration of the ferrous iron content in the final ferrite material in order to assure the desired magnetic properties. The ferrous iron content is dependent on the MnZn ferrite composition being utilized. The ferrous iron is developed through proper control of atmosphere, time, temperature, and mechanical working following heat treatment, and is accomplished in the following steps of the process.

Starting with powders of iron oxide, $Fe_2O_3$, zinc oxide, ZnO, and manganese carbonate, $MnCO_3$, the powders are weighed out in proper proportions to achieve the desired ferrite composition, with adjustments being made for volatile losses and iron pick up during milling operations. The ingredients are wet or dry milled together to obtain intimate mixing of these powders. The composition can be either wet ball or dry ball milled with stainless steel balls in a stainless steel container.

These milled ingredients are dried, pulverized into a fine powder and then placed into a furnace at a temperature in the range of 900 to 1100°C for one to ten hours under a flowing inert gas. This step eliminates volatiles and the carbonate, allows the oxides to automatically rearrange and form the ferrite spinel structure, and allows for the reduction of the desired amount or iron. This reduction is expressed as $3Fe_2O_3 = 2Fe_3O_4 + 1/2 O_2$.

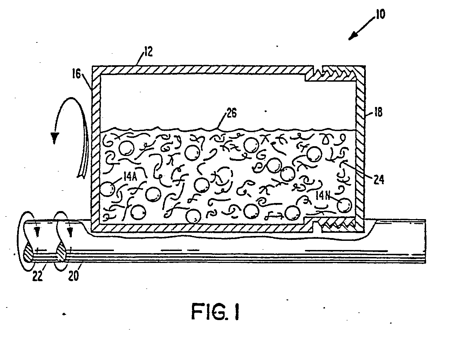

Figure 1 illustrates apparatus 10 for precalcine ball milling or post calcine ball milling including a stainless steel ball mill 12 and stainless steel balls 14a—14n therein. The mill 12 is essentially a closed cylinder 16 with a locking cover 18. The mill 12 is supported on a plurality of opposing rotatively driven rollers 20 and 22 which transfer like motion to the mill 12 as illustrated by the arrows. The closed mill 12 includes the powdered ferrite material 24 in a water solution 26 providing a milled slurry.

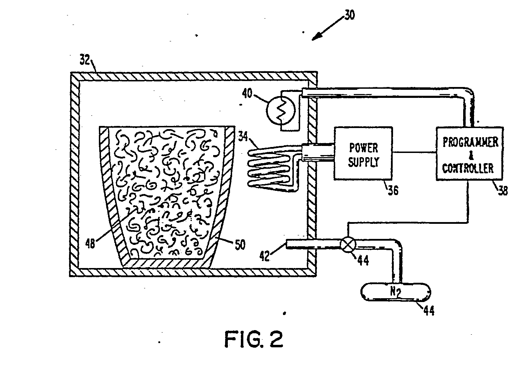

Figure 2 illustrates calcining apparatus 30 including a closed environmental oven 32. An electric heater 34 connected to a power supply 36 controlled by a programmed controller 38. A heat sensor 40 also connects to the programmed controller 38. A gas inlet 42 connects to a source of inert gas such as nitrogen 44 through a gas control valve 46 which connects to the programmed controller 38. The ferrite material 48 to be calcined is placed into a suitable crucible container 50. The programmed controller 38 is programmed to achieve the desired temperature and atmosphere over time within the oven 32.

The calcined ferrite is then cooled while being continuously swept with a flowing inert gas such as nitrogen to prevent any reoxidation of the ferrous iron. The cool down temperature of the calcine mixture should be at least 150°C or less over a period of time prior to exposure to any different type of atmosphere.

A second milling then pulverizes the ferrite material to a final particle size in a stainless steel ball media sufficient to achieve a predetermined particle size and ferrous content. Prior to the second milling step, there can be a pulverizing step of the ferrite material to a size of about 0.1 the diameter of the milling media. The wet ball milling occurs over a period of one to four hours.

The second and final milling step can be a wet ball milling of the pulverized ferrite material for achieving the desired end particle size and ferrous content. Again, stainless steel balls in a stainless steel container are utilized. Iron debris from the first milling step acts as a catalyst in the calcining step, further supplementing this mixture and affecting the control of the ferrous iron content during the calcine operation. This provides that the properties of the ferrite material are optimized for hot pressing or sintering.

Example

Using MnZn ferrite having a composition of 53 mole percent of $Fe_2O_3$; 32 Mole percent of MnO and 15 Mole percent ZnO, the $Fe_2O_3$, $MnCO_3$, and ZnO are wet ball milled in a 11.35 liter (2.5 gallon) stainless steel ball mill with stainless steel media in water for two hours. This mixture is dried at 125°C and pulverized to obtain a fine powder. Under a flowing nitrogen atmosphere, the ferrite is calcined at 1070°C for five hours. Following the calcine operation, the ferrite material is pulverized and ball milled in a 6.81 liter (1.5 gallon) stainless steel mill and stainless steel media in water for two hours. This provides a ferrite having ferrous iron content of about 1.7 percent. This is a representative example of the principles and teachings of the disclosure of the present invention.

Claims

1. Process of preparing ferrite with a predetermined ferrous content comprising the steps of: milling a ferrite composition in a stainless steel mill (12) with stainless steel media (14A—14N), drying the milled mixture and pulverizing to reach a powder, calcining the powder for a first predetermined time interval under a flowing inert atmosphere and pulverizing and ball milling in a stainless steel mill (12) with stainless steel media (14A—14N) for a second predetermined time interval providing an optimum ferrous iron content in the ferrite composition.

2. The process of claim 1, wherein said ferrite composition comprises a mixture of $Fe_2O_3$, $MnCO_3$, and ZnO.

3. The process of any preceding claim, wherein said inert atmosphere is nitrogen.

4. The process of any preceding claim, wherein said temperature is in a range of 900 to 1100°C.

5. The process of any preceding claim, wherein said first predetermined time interval is one to ten hours.

6. The process of any preceding claim, wherein said second predetermined time interval is one to four hours.

7. The process of any preceding claim, comprising the step of cooling said calcine mixture in an inert flowing atmosphere.

8. The process of claim 7, wherein said mixture is cooled to a temperature of 150°C or less.

9. Process for preparing MnZn ferrite with a predetermined ferrous content prior to hot pressing or sintering comprising the steps of:

calcining a mixture of $Fe_2O_3$, $MnCO_3$, and ZnO in a flowing nitrogen atmosphere at a temperature of 900 degrees to 1100 degrees centigrade for one to ten hours providing for formation of ferrite spinal structures;

cooling said calcined mixture to 150 degrees centigrade or less in an atmosphere of flowing nitrogen;

pulverizing said calcined ferrite mixture to a (final particle) size not exceeding 0.1 diameter of stainless steel milling media;

and, wet ball milling said pulverized ferrite mixture using stainless steel balls in a stainless steel media for a one to four hour period thereby achieving predetermined particle size with predetermined ferrous content.

Patentansprüche

1. Verfahren zur Herstellung von Ferrit mit einem bestimmten Eisen(II)-Gehalt mit den Verfahrensschritten des: Mahlens einer Ferritzusammensetzung in einer Mühle aus rostfreiem Stahl (12) mit Medien (14A—14N) aus rostfreiem Stahl, Trocknens der gemahlenen Mischung und Pulverisierens zur Erzeilung eines Pulvers, Kalzinierens des Pulvers über ein erstes bestimmtes Zeitintervall unter einer strömenden inerten Atmosphäre und Pulverisierens und Kugelmahlens in einer Mühle aus rostfreiem Stahl (12) mit Medien (14A—14N) aus rostfreiem Stahl über ein zweites bestimmtes Zeitintervall, was einen optimalen Gehalt an zweiwertigem Eisen in der Ferritzusammensetzung schafft.

2. Verfahren nach Anspruch 1, bei welchem die Ferritzusammensetzung ein Gemisch aus $Fe_2O_3$, $MnCO_3$, und ZnO umfaßt.

3. Verfahren nach irgendeinem vorstehenden Anspruch, bei welchem die inerte Atmosphäre Stickstoff ist.

4. Verfahren nach irgendeinem vorstehenden Anspruch, bei welchem die Temperatur in einem Bereich von 900 bis 1100°C liegt.

5. Verfahren nach irgendeinem vorstehenden Anspruch, bei welchem das erste bestimmte Zeitintervall ein bis zehn Stunden ist.

6. Verfahren nach irgendeinem vorstehenden Anspruch, bei welchem das zweite bestimmte Zeitintervall ein bis vier Stunden ist.

7. Verfahren nach irgendeinem vorstehenden Anspruch, welches den Verfahrensschritt des Kühlens des Kalzinationsgemisches in einer strömenden inerten Atmosphäre umfaßt.

8. Verfahren nach Anspruch 7, bei welchem das Gemisch auf eine Temperatur von 150°C oder weniger gekühlt wird.

9. Verfahren zur Herstellung von MnZn-Ferrit mit einem bestimmten Eisen(II)-Gehalt vor dem Heißpressen oder Sintern, mit den Verfahrensschritten des:

Kalzinierens eines Gemisches aus $Fe_2O_3$, $MnCO_3$ und ZnO in einer strömenden Stickstoffatmosphäre bei einer Temperatur von 900°C bis 1100°C für ein bis zehn Stunden, was die Bildung von Ferritspinell-Strukturen ermöglicht;

Kühlens des kalzinierten Gemischs auf 150°C oder weniger in einer Atmosphäre aus strömenden Stickstoff;

Pulverisierens des kalzinierten Ferritgemischs auf eine (Endteilchen-)Größe, welche 0,1 Durchmesser von Mahlmedien aus rostfreiem Stahl nicht überschreitet; und

nassen Kugelmahlens des pulverisierten Ferritgemischs unter Verwendung von Kugeln aus rostfreiem Stahl in einem Medium aus rostfreiem Stahl für eine Zeitdauer von ein bis vier Stunden, wodurch eine bestimmte Teilchengröße mit einem bestimmten Eisen(II)-Gehalt erzielt wird.

**Revendications**

1. Un procédé pour préparer une ferrite ayant un contenu ferreux prédéterminé, comprenant les étapes de: broyage d'une composition de ferrite dans un broyeur en acier inoxydable (12) dans un milieu d'acier inoxydable (14A—14N), séchage du mélange broyé et pulvérisation jusqu'à obtention d'une poudre, calcination de la poudre pendant une première durée prédéterminée sous une atmosphère circulante inerte, et pulvérisation et broyage par billes dans un broyeur en acier inoxydable (12) dans un milieu d'acier inoxydable (14A—14N) pendant une seconde durée prédéterminée pour obtenir une proportion optimale de fer ferreux dans la composition de la ferrite.

2. Le procédé de la revendication 1, dans lequel la composition de ferrite comprend un mélange de $Fe_2O_3$, $MnCo_3$ et ZnO.

3. Le procédé de l'une des revendications précédentes, dans lequel l'atmosphère inerte est constituée d'azote.

4. Le procédé de l'une des revendications précédentes, dans lequel la témperature est comprise entre 900 et 1100°C.

5. Le procédé de l'une des revendications précédentes, dans lequel la première durée prédéterminée est comprise entre 1 et 10 heures.

6. Le procédé de l'une des revendications précédentes, dans lequel la seconde durée prédéterminée est comprise entre 1 et 4 heures.

7. Le procédé de l'une des revendications précédentes, comprenant une étape de refroidissement du mélange calciné dans une atmosphère circulante inerte.

8. Le procédé de la revendication 7, dans lequel le mélange est refroidi jusqu'à une température de 150°C ou moins.

9. Un procédé pour préparer une ferrite de MnZn ayant une proportion ferreuse prédéterminée avant pressage à chaud ou frittage, comprenant les étapes de:

— calcination d'un mélange de $Fe_2O_3$, $MnCo_3$ et ZnO dans une atmosphère circulante d'azote à une température comprise entre 900 et 1100°C pendant une à dix heures pour permettre la formation des structures de spinelle de la ferrite,

— refroidissement du mélange calciné jusqu'à 150°C ou moins dans une atmosphère circulante d'azote,

— pulvérisation du mélange de ferrite calciné jusqu'à une taille (taille finale de particule) ne dépassant pas 0,1 fois le diamètre du milieu de broyage en acier inoxydable, et

— broyage par billes en milieu humid'e du mélange pulvérisé de ferrite au moyen de billes d'acier inoxydable dans un milieu d'acier inoxydable pendant une durée de une à quatre heures, de manière à obtenir la taille de particule prédéterminée avec un contenu ferreux prédéterminé.

FIG. 1

1

FIG. 2